# EUROPEAN PATENT APPLICATION

(11) **EP 4 776 355 A1**
(43) Date of publication of application: **15.07.2026**
(21) Application number: 25150967.5
(22) Date of filing: 09.01.2025
(51) Int. Cl.: H01M 8/18

(54) **EMBODIMENT HAVING A CHANNEL FOR TRANSPORTING A FLUID**

(71) Applicant: Siemens Energy Global GmbH & Co. KG, 81739 München (DE)
(72) Inventor: Kießlich, Simon, 91056 Erlangen (DE); Anschütz, Lucas, 90518 Altdorf (DE)

(57) **Abstract**

A backflow limiting structure (2a, 2b, 2c, 2d, 2e, 2f, 2g, 2h, 2i) which allows a flow of fluid in one direction (30). The backflow limiting structure (2a, 2b, 2c, 2d, 2e, 2f, 2g, 2h, 2i) can be arranged in a channel (1a, 1b). The channel (1a, 1b) can be part of an electrolyzer (24), fuel cell and/or storage cell. A resistance barrier (5a, 5b, 5c, 5d, 5e, 5f) of a backflow limiting structure (2a, 2b, 2c, 2d) provides an auxiliary section (10a, 10b, 10c, 10d) and a main section (9a, 9b, 9c, 9d). The backflow limiting structure (2a, 2b, 2c, 2d, 2e, 2f, 2g, 2h, 2i) interacts with a fluid, creating a different resistance depending on the direction of flow in the resistance barrier (5a, 5b, 5c, 5d, 5e, 5f).

## Description

The invention refers to an embodiment having a channel for transporting a fluid, the channel having a backflow limiting structure which fosters a flow of the fluid in a first direction while suppressing a backflow of the fluid in a second direction, the first and the second direction having an opposite orientation.

Such an embodiment is known from the US patent US 132,955,98 A. In this document, a combustion motor is disclosed. The combustion motor has a valvular conduit transporting a fluid to a central cavity where a combustion takes place. The valvular conduit is used to avoid rapid reversals of direction of the fluid.

It is the object of the invention to apply the backflow limiting structure in different settings, as well as improving the embodiment.

According to the invention, this is achieved in the case of an embodiment mentioned at the beginning by connecting the channel to a reservoir of an electrochemical cell, having a cathode and an anode.

The channel and the reservoir of the electrochemical cell are connected preferably to feed and/or to empty the reservoir with the fluid. The reservoir can hold the volume of the fluid inside the electrochemical cell. The first direction is the desired direction of flow within the channel. The first direction can be the direction to feed the fluid to the reservoir or to empty the fluid from the reservoir. Furthermore, the flow can pass through the reservoir. Independent from the design of the electrochemical cell, the first direction can also be defined with reference to a functionally correct direction of fluid flow in different settings, for example an electrolyzer, a fuel cell or a storage cell. An alignment of the desired direction of flow within the channel and the functionally correct direction of fluid flow in different settings would be particularly advantageous in a cycled process. To support reliable cycled processes, a redundancy of backflow limiting structures can be used. Multiple fluid deviation structures, such as channels mounted in parallel, can be used in order to deviate the flow in the first direction from disturbed channels.

The electrochemical cell with cathode and anode is used for conversion of energy between electrical and chemical energy by using electrochemical processes. The cathode and the anode are arranged at least partly inside the reservoir and in connection with the fluid. The fluid is transported in the first direction by either gravity or preferably a fluid accelerating device, such as a pump. A backflow limiting structure fosters a flow in the first direction, suppressing the flow in the second direction. A malfunction, for example a leakage or a fluid accelerating device failure, can result in the backflow of the fluid in the second direction. The backflow interferes with the flow in the first direction and can lead to inefficiencies of a technical process or at least partly loss of the fluid. The backflow limiting structure, therefore, can increase the efficiency and safety.

Especially during malfunctions, the backflow limiting structure can dam the channel at least partly. The damming is a result of when the backflow/flow of the fluid in the second direction occurs.

A further advantage is that the backflow limiting structure is controlled by its design to activate the damming of the channel. It preferably acts based on its intrinsic manufactured structure designed to suppress the flow in the second direction.

The fluid is a substance with a non-solid consistency. The fluid comprises at least partly, a liquid, a gas or a gel structure or a mixture thereof. Preferably, the fluid is a liquid, or a mixture of liquid and gas. The mixture can be saturated or unsaturated, depending on different operations. The liquid is preferably H₂O or an acid. Additionally, the gas, preferably H₂ or O₂ can be part of the liquid comprising fluid. The inside of the channel is limited by the channel wall and the channel wall is in contact with the fluid within the channel. The channel can split into multiple channels.

Further, it can be advantageously foreseen that the backflow limiting structure provides a resistance barrier, the resistance barrier fostering a laminar flow in the first direction, while suppressing the backflow in the second direction.

The laminar flow of the fluid is a flow with regular paths, preferably having thin layers of fluid gliding over each other, limiting unwanted turbulence and fostering a constant velocity. These layers are typically named gliding layers. Contrarily, in a turbulent flow the fluid undergoes irregular changes of direction, velocity fluctuations and mixing of the thin layers.

The resistance barrier increases the flow resistance of the fluid within the channel, especially in the area of the channel where the backflow limiting structure is arranged. The shape and arrangement of the resistance barrier promotes the structure of the gliding layers, by limiting the creation of turbulence.

The resistance barrier promotes the creation of turbulence when exposed to a flow of fluid in the second direction, by impacting and splitting the guiding layers. The turbulence created upon having fluid flowing in the second direction would at least partly dam the channel and suppress the backflow in the second direction.

Further, it can be advantageously foreseen that the resistance barrier is positioned at an obtuse angle between a channel wall tangent and the flow of fluid in the first direction, and at an acute angle between the channel wall tangent and the flow of fluid in the second direction.

The positioning of the resistance barrier in the channel can increase and/or decrease the flow resistance within the channel. This can be achieved by having, for example, an inclined resistance barrier towards the channel wall at an obtuse angle between the channel wall tangent and the flow of fluid in the first direction and an acute angle between the wall tangent and the flow of fluid in the second direction.

The resistance barrier inclined at an obtuse angle between the wall tangent and the flow of fluid in the first direction would foster a laminar flow in the first direction, by limiting the creating of turbulence when diverting the flow of fluid by the obtuse angle and promoting a laminar flow. Contrarily, the resistance barrier inclined at an acute angle between the channel wall tangent and the flow of fluid in the second direction would promote the creation of turbulence, by diverting the flow of fluid by an acute angle and suppressing a laminar flow in the second direction.

Further, it can be advantageously foreseen that the backflow limiting structure provides a resistance barrier, having a first deflector side and a second deflector side, the first deflector side fostering a laminar flow in the first direction, while the second deflector side suppresses the backflow in the second direction by disturbing a laminar flow.

The advantage of this barrier is that with its two deflector sides it has different resistances depending on the direction of the flow. The fluid flowing in the first direction interacts with the first deflector side. The first deflector side can have a shape and/or surface characteristics which foster a laminar flow of the fluid in the first direction. The surface of the first deflector side can have embedded or attached structures which guide the fluid towards maintaining the laminar flow, for example, striation or raised channels parallel with the thin layers of the fluid flowing in the first direction. Furthermore, the shape of the first deflector side can create changes of direction, for example, obtuse angle deviations, channel openings, while maintain the laminar flow of the fluid in the first direction.

The fluid flowing in the second direction (backflow) interacts with the second deflector side. The second deflector side can have surface and/or shape characteristics which suppress the flow in the second direction, by disturbing a laminar flow and/or creating a turbulent flow. The surface and shape of the second deflector side can have embedded or attached structures which increase friction between the fluid flowing in the second direction and the second deflector side. For example, striations or raised channel perpendicular to the second direction can create a turbulent flow of the fluid flowing in the second direction. Furthermore, the shape of the second deflector side can, for example, impale the flow of fluid in the second direction at an acute angle, have channel constrictions, bends and turns, pockets, which increase friction with the fluid.

Additionally, the second deflector side can have a surface and shape which guides a part of the fluid flowing in the second direction against a remaining fluid flowing in the second direction. In the area where part of the fluid is returned and impacts the remaining fluid, a turbulence is created.

The resistance barrier can be shaped by the channel wall, the resistance barrier having, for example, bends and curves, channel constrictions and funnel structures. Preferably, the resistance barrier can originate from the channel wall, having for example, spikes and/or other obstacles. Furthermore, the resistance barrier can be modular, made of multiple parts, and attached to the channel wall. The modular resistance barrier can be attached to the wall exemplarily with fastening means, hinges, or form fit. The material from which the resistance barrier is made can be the same as the channel wall, or, for example, different rigid materials, elastic materials or a mixture of both.

The first and second deflector sides can be shaped by the resistance barrier, originating from the resistance barrier, or attached to the resistance barrier. The first and second deflector sides can be made, for example, of rigid materials, elastic materials, or a mixture of both. A tip of the resistance barrier can have multiple shapes, for example, sharp or rounded. The deflector sides can, for example, consist of monolithic or multiple elements. The monolithic and the multiple elements can have different flexibilities. They can be at least partially fixed and/or rigid, or a combination of both.

A monolithic deflector side allows easy and fast replacement. A resistance barrier having multiple elements is easy to repair in case of malfunctioning by replacing malfunctional elements. Further, multiple elements can be selected/chosen from a variety of multiple elements manufacturers to improve or to adjust the function of the resistance barrier.

Further, it can be advantageously foreseen that the first deflector side is positioned at an obtuse angle between a channel wall tangent and the flow of fluid in the first direction, while the second deflector side is positioned at an acute angle between the channel wall tangent and the flow of fluid in the second direction.

The positioning of the resistance barrier in the channel can increase the flow resistance within the channel.

The first deflector side and the second deflector side can be positioned at different angles relative to the channel wall tangent, increasing the flow resistance within the channel.

An obtuse angle, for example, would be of degrees between 75 and 210, but preferably at least 130 degrees. Contrarily, an acute angle would have degrees between 0 and 130 degrees, but preferably less or equal to 90 degrees. A deviation of the flow of the fluid at the obtuse angle, while still increasing the resistance of flow, would disturb the flow less than an interaction of the flow of the fluid on the acute angle.

For example, a first deflector side positioned at an obtuse angle between 150 to 180 degrees, would deviate the flow of fluid in the first direction while still fostering the laminar flow. Contrarily, a second deflector side positioned at an acute angle between 30 and 90 degrees, especially 45 degrees, can disturb the laminar flow and the gliding layers, as well as creating turbulence. This can be achieved, for example, by having the resistance barrier positioned at an angle within the channel. Therefore, the angles of the first deflector side and second deflector side can be complementary and positioned at, for example, 150 degrees and 30 degrees.

The first deflector side and the second deflector side can have an area where they touch each other, but they can also be separated from each other.

Furthermore, the deviation of the fluid by the obtuse angle or the acute angle can be transferred to the surface of the first or second deflector sides by a circular or angular impact region. The circular and angular impact regions are the points of impact between the fluid flowing in the first direction and the first deflector sides and the fluid flowing in the second direction and the second deflector side.

The impact regions on the first deflector sides can differ from the ones in the second deflector sides. For example, the maintenance of laminar flow upon the impact of the fluid flowing in the first direction and the first deflector side can be fostered by having the circular impact region, having a curved surface. The curved surface would mitigate the impact on the first deflector side, smoothly turning the fluid from the channel onto the surface of the first deflector side.

Contrarily, the angular impact regions in the second deflector sides can increase the turbulent flow of the fluid in the second direction, upon its impact with the second deflector sides. This can be achieved, for example, by having the second deflector side installed as a corner relative to the channel wall. The corner would direct the fluid straight to the barrier, therefore increasing the turbulent flow upon the impact with the second deflector side.

Further, it can be advantageously foreseen that the backflow limiting structure is divided by the resistance barrier providing a main section and an auxiliary section.

The division of the channel into a main section and auxiliary section can increase the resistance of the channel, particularly where the backflow limiting structure is positioned within the channel. The main and auxiliary sections can have different shapes and forms, influencing the flow of fluid differently. They are preferably limited by the resistance barrier and the channel wall. The main section is the section providing a continuing path, while the auxiliary section provides a space for diverted fluid. The diverted fluid is at least a part of the fluid flowing in the second direction, separated by the resistance barrier.

To structure the continuing path, the resistance barrier can be arranged, for example, at different angles and/or having multiple bends. The continuing path can be limited by at least one resistance barrier. Multiple resistance barriers can be placed in series and in parallel, for example, to connect the main sections and extend the continuing path. Therefore, the continuing path can vary in length and width depending on the way and the number of resistance barriers within the channel. A succession of main sections can be arranged in a winding pattern, forming a long continuing path fostering the laminar flow in the first direction. The winding pattern could be, for example, a succession of straight resistance barriers, positioned complementary to opposite channel walls.

The resistance barrier separating the channel into the main and auxiliary sections can have multiple forms. For example, it can be a projection from the channel wall to the center of the channel, a perpendicular structure to the channel wall tangent, a peninsula formed of the channel wall, or a cone shape, preferably pointing against the flow in the first direction.

The advantage of having a division by the resistance barrier into the main section and the auxiliary section is that the fluid flowing in the first direction would interact with the resistance barrier differently from the fluid flowing in the second direction. Preferably, the fluid flowing in the first direction would continue to flow via the continuing path, having its laminar flow fostered, regardless of possible channel constrictions, narrows or merges.

The auxiliary section, can have, for example, pockets within the channel wall, pathways starting from the second direction and returning in the first direction, or walls perpendicular to the second direction.

An example of a resistance barrier providing the main and auxiliary sections is a straight resistance barrier inclined towards the second direction at an acute angle relative to the channel wall tangent. This resistance barrier can originate from the channel wall at one side, and free at the side facing the inside of the channel. In this case, the majority of the volume of the fluid flowing in the first direction would be diverted to the main section while its laminar flow would be fostered. Furthermore, a succession of such resistance barriers placed in the winding pattern, would repeatedly foster the laminar flow of the fluid flowing in the first direction through the principal pathway. Contrarily, the volume of the fluid flowing in the second direction would be at least partly divided and directed into the main section and the auxiliary section.

The auxiliary section can have different designs, for example a looped channel, a funnel structure, a curved pocket, or a peninsula structure, etc. An auxiliary section with a looped channel, for example would return at least part of the fluid flowing in the second direction against itself, creating turbulence in the area where the fluids are merged. This turbulence can result in at least partly damming the continuing path. The funnel structure, curved pockets and peninsula structures, etc. can also guide the fluid from the second direction to the first direction.

To improve the efficiency, the arrangement of the resistance barriers can be placed complementary or offset to each other relative to the first or second direction.

Furthermore, a succession of such resistance barriers attached on the opposite sides of the channel wall, providing a continuing path, can create consecutive main and auxiliary sections which repeat the process of damming the continuing path in the second direction.

The main and auxiliary sections can be augmented by first and second deflectors. Furthermore, the channel wall limiting the resistance barrier in the main section can have different striations or raises within their surface, which further foster a laminar flow in the first direction. Contrarily, the channel wall limiting the auxiliary section can have striations or raised channel which promote the turbulence for the flow of fluid in the second direction.

Further, it can be advantageously foreseen that the main section and the auxiliary section merge in the first direction while separating in the second direction.

The resistance barrier can be placed and/or have a shape which lead to a convergence between the main and auxiliary sections in the first direction. Contrarily, the main section and the auxiliary section diverge in the second direction. The main and auxiliary sections distance in the second direction and close in the first direction. The diverged auxiliary section can provide channel terminations, returning pathways, separate channels, or other means of disturbing laminar flow. The separated auxiliary section can be concave towards the second direction or have an acute or perpendicular orientation towards the second direction. The separated main section can provide a continuing path.

The separation of the main and auxiliary sections in the second direction, would suppress the laminar flow in the second direction by fostering turbulence. This turbulence can be created by at least partly dividing the fluid flowing in the second direction into the main section and the auxiliary section. By partially dividing the fluid, the gliding layers of the fluid can separate and create turbulence of the flow in the second direction. Furthermore, the diverted fluid, can, for example, be preferably directed to a channel termination of the auxiliary section. For example, a pocket, can be used as a channel termination. As the diverted fluid impacts the channel termination, further turbulence would be created. The further created turbulence, can, for example, escape the auxiliary section and disturb the flow in the second direction by suppressing it.

Contrarily, the merging of the main section and auxiliary section in the first direction, would foster the laminar flow of the fluid in the first direction. This can be achieved by having, for example, resistance barriers, especially the first deflector sides. with curved surfaces facing the first direction.

The merging and separating qualities of the main and auxiliary section can be further exemplified when the channel is subject to, for example, similar velocity flows of fluid from both the first and the second directions at the same time.

A resistance barrier shaped as a cone, for example, with a tip facing the second direction and a convex/concave base facing the first direction would merge the main and auxiliary sections in the first direction, while separating them in the second direction. The area where the separation takes place can be named as bow. The bow can be projected from the channel wall and provide the main section on the side facing the opening of the channel and the auxiliary section on the side facing the channel wall. The first deflector side of the resistance barrier can be convex, oriented towards the first direction, and the second deflector side of the resistance barrier concave towards the second direction. When subject to the flow in the first direction, for example, the laminar flow of the fluid would be fostered. Contrarily, when subject to the flow in the second direction, the fluid would be separated into the main and auxiliary section.

Further, it can be advantageously foreseen that the auxiliary section returns at least part of the fluid flowing in the second direction to the main section in the first direction, by having a returning pathway.

The shape of the auxiliary section can in the form of a carved cut, the carved cut having the returning pathway. The auxiliary section can have at least a returning pathway to return the fluid in the first direction. The fluid that returns in the first direction can be named the returned fluid. The returning pathway can be shaped, for example, by the second deflector side. A second deflector, particularly a concave one, can create currents and return of fluid to the continuing path, preferably opposite to the second direction.

Preferably, the auxiliary section has a returning pathway in the form of a looped channel. Compared to a cut out, the looped channel is separated from the channel, having an entrance and an exit connecting it to the channel. Unlike a returning pathway, creating turbulence, the lopped channel can guide the returned fluid in a low friction manner. Therefore, the looped channel can foster the fluid's energy. The returned fluid can impact the fluid flowing in the second direction, damming the continuing path. The looped channels can have, for examples, striations or raised channels which promote a laminar flow within the looped channel, to foster the fluid's energy before impacting the fluid in the second direction.

The looped channel can originate from the separation of the channel into the auxiliary section and the main section, merging in the second direction, while converging in the first direction. The looped channel can be initially pointing in the second direction, followed by a bend, shaping it to point in the first direction. Preferably, the bend changes the orientation of the loop within the range of 120 to 340 degrees, preferably around 180 degrees, opposing the second direction. Upon completing the bend, the exit of the loop channel merges with the continuing path in the first direction. Upon the flow of fluid in the second direction, at least part of the fluid will be directed to the auxiliary section and the looped channel.

The channel can have multiple returning pathways, preferably looped channels. The multiple returning pathways can preferably be arranged in series, complementary to each other relative to the first and second directions, preferably on multiple areas around the inside of the channel.

Further, it can be advantageously foreseen that the main section provides a continuing path, wherein the auxiliary section provides a resistance pocket.

The continuing path stretches along the first and/or second direction(s). The resistance pocket is a channel termination and can be limited by the resistance barrier or shaped by the channel wall. Preferably, the resistance pocket is the auxiliary section, providing the channel termination.

For example, a resistance barrier, in particular its second deflector side inclined at an acute angle to the channel wall in the first direction can create a continuing path and a resistance pocket. The auxiliary section can provide the resistance pocket. Whereas the resistance pocket does not act on the fluid flowing in the first direction, it creates turbulent flow to at least part of the fluid in the second direction.

A further example of the resistance pocket is a channel wall shaped to include a chamber, whereby the chamber can provide the auxiliary section. The chamber can be limited by the channel wall on one side, and the second deflector, particularly a concave one towards the second direction. Due to its concave shape, the second deflector can direct at least part of the fluid flowing in the second direction in the chamber, creating turbulent flow, subsequently returning towards the second direction and at least partly damming the continuing path. Contrarily, upon flow in the first direction, the fluid is diverted from the chamber, continuing flowing via the continuing path.

Ideally, a succession of resistance pockets can be part of the channel, to repeat the damming effect of the continuing path.

A special type of a resistance pocket is the returning pathway. A looped channel can be created by placing a divider in the returning pathway. The divider limits the inlet and exit of the looped channel.

Further, it can be advantageously foreseen that at least one of the resistance barriers is at least partly rigid and/or partly mobile/ in particularly one of the deflector sides.

The resistance barrier can have different designs. A rigid part of the resistance barrier can be a fixed and/or rigid structure, whereas a mobile part of the deflector side can be a moveable and/or bending structure.

The rigid part of the resistance barrier, particularly the deflector sides, can be manufactured from solid materials, such as metals, polymers, etc. These solid materials are resistant and durable and can be made from the same material as the channel. Furthermore, they can be embedded in the structure of the channel by, for example, being poured into molds when manufacturing the channel, or modular, by being attached to the channel.

The mobile resistance barrier, particularly the deflector sides, can have a moveable design. The moveability can be arranged by having, elastic, flexible or moveable elements. The moveable elements can have different positions. As the resistance barrier is able to influence the friction of the channel, by having different positions, the channel is influenced differently. The moveable elements can be opened, partially closed or closed. For example, the channel can provide low friction when the moveable elements are opened, medium friction when partially closed and high friction when closed. These different statuses can be created by moveable gear elements, such as, for example, hinges.

A valve, for example, can be a partly mobile resistance barrier. The valve can be formed of two second deflector sides inclined at an acute angle to the channel wall tangent, facing the second direction in the channel. Each resistance barrier can be attached to the wall via a hinge or via an elastic material. The hinge or elastic material is the mobile part of the resistance barrier and can have an angle of opening from 0 to 360 degrees, but preferably, from 30 to 90 degrees to the channel wall tangent. When exposed to flow of fluid in the first direction, the resistance barriers would open. Contrarily, when exposed to flow of fluid in the second direction, the resistance barriers would at least partly close and increase the flow resistance in the second direction.

A further example of resistance barrier being at least partly rigid and/or at least partly mobile is a resistance barrier being at least partly made of, for example, an elastic material which changes its flexibility depending on its thickness. the resistance barrier can have a thick base and a thin tip. The thick base, close to the channel wall, can remain fixed upon external stimuli, whereas the tip can vary its shape.

A further example of a resistance barrier with mobile and rigid structures is a ventil, consisting of an opening, a ventil body and a pressure element. The ventil body can have different shapes, for example, spherical or conic. When exposed to flow of fluid in the first direction, the pressure element can push the ventil body, which is the mobile structure, away from the opening. Contrarily, when exposed to flow of fluid in the second direction, the ventil body is pushed by the pressure element to obstruct at least partly the opening. The function of the pressure element can be accomplished by the structure of the ventil body. The ventil itself can have an elastic design.

A further example is a membrane divided into different sections, for example fins, or flaps. The sections can act as ventil bodies and be limited to movement. In the first direction, the different sections can open and wide, and in the second direction, different sections can narrow to each other, creating a nearly closed membrane.

The different sections can have, for example, a stop or a limited gear element to stop their bending towards the first direction. Upon flow of fluid in the first direction, the different sections would distance from each other, allowing the fluid to pass through. Contrarily, when exposed to flow of fluid in the second direction, the different sections would close, preferably linking to each other, damming the channel at least partly.

Further, it can be advantageously foreseen that the resistance barrier, particularly the first and/or second deflector sides, is at least partly shaped by a channel limiting wall or different from the wall.

Parts of the channel limiting wall can be used to provide the resistance barrier, particularly a deflector side. The channel limiting wall can have a specific structure to provide the resistance barrier. At least parts of the channel limiting wall protrude through the channel, forming the resistance barrier.

There are different options for shaping the resistance barrier by a channel limiting wall. For example, the channel limiting wall and the barrier can be molded, carved out, etc. The advantage of having such resistance barrier is gap free connection to the channel limiting wall. This improves the reliability of the structure, by providing a continuous surface and transition from the channel wall to the barrier. This reduced the risk of resistance barrier malfunction within the channel.

The resistance barrier can also be, for example, different from the wall. The resistance barrier made differently from the wall can be made of different materials from the wall, for example materials having different physical properties.

If, for example, the channel wall is rigid, the resistance barrier can be at least partly elastic.

The deflector sides different from the wall, can be, for example, arranged with a distance from the channel wall. For a desired positioned of the different deflector sides in the channel, there is a supporting structure, where the supporting structure has a minor influence on the flow of fluid in the channel. Another option is to have a resistance barrier with no connection to the wall. An example of such barrier would be a sphere, free to move within certain parts of the channel.

The different resistance barrier can be, for example, modular and, therefore, easy to replace depending on different resistances needed within the channel or a malfunction. They can be connected to the channel wall by, for example, a form fit, gears, glued, etc.

An example of a different resistance barrier would be a structure formed of a resistance barrier in the shape of, for example, hollow cone, attached with a supporting structure to the channel wall. The base of the hollow cone, can, for example face the second direction, while the tip of the cone can face the first direction. The supporting structure can preferably be thin, as to have a minor influence on the laminar flow within the channel. Upon flow of fluid in the first direction, the fluid would glide across the surface of the cone. Contrarily, when flowing in the second direction, the empty base of the cone would be able to act as a resistance pocket.

Further, it can be advantageously foreseen that an at least partly mobile resistance barrier is activated by a flow in the second direction, while being passive upon a flow in the first direction.

Compared to a rigid resistance barrier, the at least partly mobile resistance barrier can have different statuses, such as an active status and a passive status. The active status of the resistance barrier refers to an increase of the fluid flow resistance within the channel. Contrarily, a passive status of the resistance barrier has reduced friction comparing to the active status of the same barrier. An activation and/or a passivation of the resistance barrier can be achieved in different ways. For example, the force of the fluid flow can activate the barrier immediately. In this way, the resistance barrier can be attached to the wall, for example, towards the second direction of the channel, becoming active upon the flow of fluid in the second direction, while being passive upon the flow of fluid in the first direction.

A further example is an at least partly mobile resistance barrier being controlled by, for example, sensors or outside input for closing or opening of moveable elements, such as, for example fins.

An example of the activation of the resistance barrier in the second direction is a partly mobile resistance barrier having an elastic second deflector side. The resistance barrier can be inclined at an acute angle to the channel wall tangent, towards the second direction. It can be limited by the channel wall on one side and open at the side facing the inside of the channel. When exposed to a flow of fluid in the first direction, the pressure exerted on the first resistance barrier would allow the pass of fluid with limited friction. Contrarily, when exposed to a flow of fluid in the second direction, the friction and pressure exerted on the second deflector side would activate the resistance barrier resulting in at least partially obstructing the channel.

Furthermore, two such resistance barriers can interact with each other. It can be advantageously foreseen that two interacting resistance barriers are arranged at opposite orientation within the channel wall. They can be aligned or offset. At least one of the resistance barriers can be moveable, but preferably more than one interacting barrier are moveable. Preferably, interacting resistance barriers are arranged to have a contact, while increasing the channel resistance. The resistance barriers can have the same length and centered so when moved perpendicular to the channel, an obstruction of the channel occurs. Therefore, when the two resistance barriers are subject to the flow in the second direction, the flow of fluid is suppressed.

Further, it can be advantageously foreseen that the reservoir is limited by a frame, wherein the channel protrudes at least partly through the frame.

An electrochemical cell can be supported by the frame. The frame is limiting the reservoir of the electrochemical cell. The channel can be used to connect the reservoir with an additional structure, e.g. a duct. The frame is part of the electrochemical cell and at least partly limits the reservoir. While the frame limits the reservoir, it can also be used to limit the channel partly. By using the frame to limit the channel and by protruding at least partly through the frame, the frame structure provides structural integrity and limitation of the channel. Therefore, no additional sealing or tubes are needed to connect the frame and the channel, inside the frame. A further advantage is that no additional structure is needed to guide the channel to the reservoir. The channel can be used to fill or empty the reservoir with fluid.

The anode and the cathode are at least partly arranged inside the reservoir to make sure that the fluid stored in the reservoir can be influenced by the cathode and the anode. Preferably, there is a separation between the cathode and the anode, avoiding direct contact.

The reservoir can be used to store a fluid. Additionally, the reservoir can be separated in a first and a second section by a separating element. The separating element can, for example, separate the anode and cathode from each other. The separating element can be semi permeable, and the fluid is able to diffuse through it. The separating element can be, for example, a permeable exchange membrane limited by the cathode and the anode, used for hydrolysis.

The channel can be positioned at the exit and/or the entry of the reservoir. Preferably, the channel is positioned at both entry and exit points at the reservoir, with the first direction in alignment of the desired direction of flow within any sections of the frame. Entry and exit of the reservoir are arranged at opposing sides of the separating element. For example, the entry can be at the side of the separating element where the cathode is arranged, whereas the exist can be at the side where the anode is arranged. Furthermore, at least part of the channel can be engulfed by the reservoir.

Further, it can be advantageously foreseen that the electrochemical cell has at least a duct, the duct is connected to at least a channel.

The duct can act as a feeder and/or collector of the channel, having a larger cross section than the channel. In this way, there would be enough space to feed or connect enough fluid to or from the channel. The channel can be arranged as a continuation of the duct in the first direction when feeding the reservoir. Furthermore, the duct can be arranged as a continuation of the channel in the first direction when collecting from the reservoir. The duct can also be connected to different channels.

The duct tube and the channel can be made of separate pieces or one piece. If made of separate pieces, the duct tube and the channel having the backflow limiting structure can be bound by, for example, sealed fastening means. Furthermore, the channel having the backflow limiting structure and the duct tube can be manufactured as one piece, by pouring into a specific mold.

A duct can have a first branch and a second branch, both acting as feeders and/or collectors of the channel.

Further, it can be advantageously foreseen that the channel, in particular multiple channels, is/are connected to the duct in the manner of a branch.

The reservoir and duct can be connected by a channel. A channel in the manner of a branch allows a connection of duct and reservoir along the axial extension of the duct. This allows the arrangement of multiple channels in parallel along the axial extension of the duct. The multiple channels can each be connected with a different reservoir. Furthermore, part or all the multiple channels can be connected to the same reservoir. This allows to increase the number of inlets or outlets in the reservoir.

A frame can advantageously be used to form a channel at least partly. The frame can branch from the duct. An angular arrangement, preferably an orthogonal arrangement of channel and duct allows a compact design of the electrochemical cell. Especially the duct and channel can be at least partly formed by a frame having an angular orientation of duct and channel.

A channel can branch from the duct to the reservoir. for example, on the anode side of the reservoir. Starting with a main branch, the channels can diverge into multiple branches towards the reservoir. The multiple channels can start as separate branches, for example, on the cathode side of the reservoir, and converge into a principal branch towards the duct collecting products from the reservoir.

The channel or multiple channels multiple channels can be modular, or part of the reservoir and/or the duct. They can be attached to the reservoir/and or the duct with fastening means or poured at a single structure in connection with the reservoir and/or the ducts.

Different channels can have different diameters, or the same diameter. Their length of channels can also vary. In the case of a malfunction of the modular channel, the functioning multiple channels can continue transporting the fluid. Furthermore, the malfunctioning modular channel can be replaced.

Further, it can be advantageously foreseen that the multiple channels are arranged in a manifold structure.

Compared to the reservoir and to the reservoir limiting frame, the duct has a smaller cross section, especially when the channel is a branch of the duct. A manifold structure of multiple channels allows a transition from a large cross section of the duct to a small cross section of the channel. This allows a channel to diverge in the area of the reservoir and be able to evenly spread fluids to the reservoir.

The manifold structure can have a principal pathway, dividing into at least two subsequent pathways. Each subsequent pathway can further divide into further subsequent pathways. The manifold arrangement can, for example, evenly spread reactants towards the reservoir and ensure an effective collection of products from the reservoir.

Further, it can be advantageously foreseen that a duct connects multiple electrochemical cells, the electrochemical cells being arranged as an electrochemical cell stack.

The electrochemical cell is encapsuled by the frame. Preferably, multiple electrochemical cells can be stacked, forming an electrochemical cell stack. Preferably, the electrochemical cell stack is mechanically supported by the frame. The electrochemical cells within the stack are preferably pressed together and rigidly connected. The joint gap between the cells is preferably minimal and fluid tight sealed.

The connection layers between the stacked electrochemical cells are angular, preferably perpendicular to the axis of the compression force of the stack. Furthermore, the duct is also angular to the force of compression of the electrochemical cell stack, preferably perpendicular as well.

The channels, especially the branches angular to the duct can be independent from the frame or formed by the frame.

Further, it can be advantageously foreseen that the cathode and the anode are segregated by an electrochemical separation element.

The cathode and the anode are arranged at least partly inside the reservoir and the frame. The reservoir is preferably filled with the fluid, fluid which is in contact with both the anode and the cathode. While the cathode is positively charged and connected to a positive power source, the anode is negatively charged and connected to a negative power source. To improve the efficiency of the cathode and the anode, they can be separated from each other with the separating element. In this way, direct contact is avoided, and they are electrically connected to the fluid.

To improve the function of the cathode and the anode, they can be separated from each other, in this way there is no direct contact, they are electrically connected by the fluid.

The electrochemical separation element separates the reservoir in the first section and the second section. The separating element controls the exchange between the first and second sections, limiting the passage of the fluid stored inside the reservoir - e.g. it separates parts of the liquid, while preferably permitting the passing of protons or other small particles. Preferably, the anode is arranged in the first section of the reservoir and the cathode in the second section of the reservoir.

The electrochemical separation element can be, for example, a fluid element or a solid element. Preferably, the electrochemical separation element is a membrane, especially a permeable exchange membrane. Examples of the electrochemical separation elements are alkaline, polymer electrolyte membrane (PEM), and solid oxide. The permeable exchange membrane can have diffusion characteristics, permitting the transfer of particles between the cathode and the anode. The electrochemical cell converts reactant into products. The reactants, can be, for example, liquids or gases, and the products can be, for example, gases such as hydrogen and oxygen, electricity, etc.

Further, it can be advantageously foreseen that the electrochemical cell is part of an electrolyzer.

The electrolyzer uses electrical energy to separate substances into molecules. The electrolyzer can comprise of a variety of parts. An important element of the electrolyzer is the electrochemical cell. Other parts of the electrolyzer include, for example, a storage tank, feeding and collecting ducts, a pump and electrochemical cells, and a cathode and anode connected to electricity. The feeding and collecting pipes can connect to the electrochemical cell with ducts and the channels. Preferably, the electrochemical cell, preferably multiple electrochemical cells are connected to the ducts via channels arranged in a manifold structure.

Each electrochemical cell can have, for example, a bottom channel manifold structure and top channel manifold structure. The electrolyzer preferably separates fluids, for example, water, into hydrogen and oxygen. To do so, it is preferred to have a circular movement of fluid in the electrolyzer. The circular movement can be fostered by the action of at least a pump. The pump can, for example, direct the fluid through the ducts, the electrochemical cells, and the separator. Preferably, the separator would separate the gas from the liquids. The liquids can subsequently repeat the circular movement within the electrolyzer, while the gases can preferably be stored.

Further, it can be advantageously foreseen that the electrochemical cell is part of a fuel cell.

The fuel cell converts chemical energy into electricity. For example, the fuel cell can use hydrogen to convert into electricity.

In order to do so, the electrochemical cell can be configured as, for example, a hydrogen fueled fuel cell which produces electricity.

Further, it can be advantageously foreseen that
the electrochemical cell is part of a storage cell.

Differently to the fuel cell, a storage cell generates energy from stored fuel.

### Description of Figures

In the following text, exemplary embodiments of the invention will be shown diagrammatically in a drawing and will be described in greater detail subsequently.

Here, in the drawing:
- Figure 1: shows a cross-section side view of an electrolyzer;
- Figure 2: shows a front to back cross section of a first electrochemical cell;
- Figure 3: shows a front to back cross section of a second embodiment of an electrochemical cell;
- Figure 4: shows a front to back cross section of the second embodiment electrochemical cell turned by 180 degrees relative to the vertical axis;
- Figure 5: shows a V - V view of the second embodiment of the electrochemical cell from Figure 4;
- Figure 6: shows a side view of an electrochemical cell stack;
- Figure 7: shows a manifold arrangement of channels;
- Figure 8: show a branch structure of channels, and

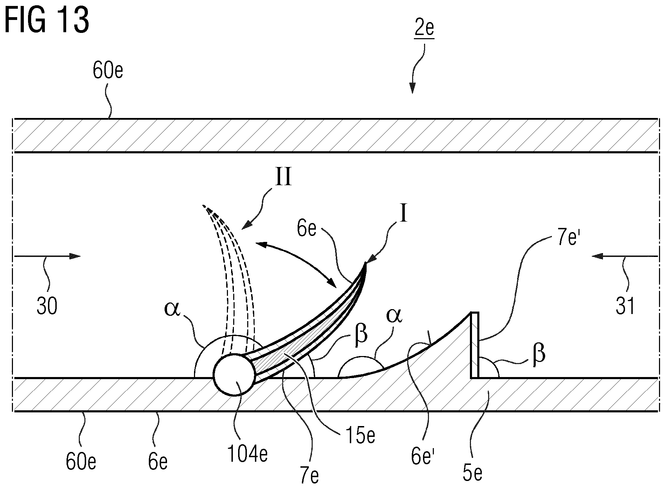

- Figures 9, 10, 11, 12, 13, 14, 15 and 16: show a first,second, third, fourth, fifth, sixth, seventh, eighth and ninth embodiments of a backflow limiting structure.

### Figure 1

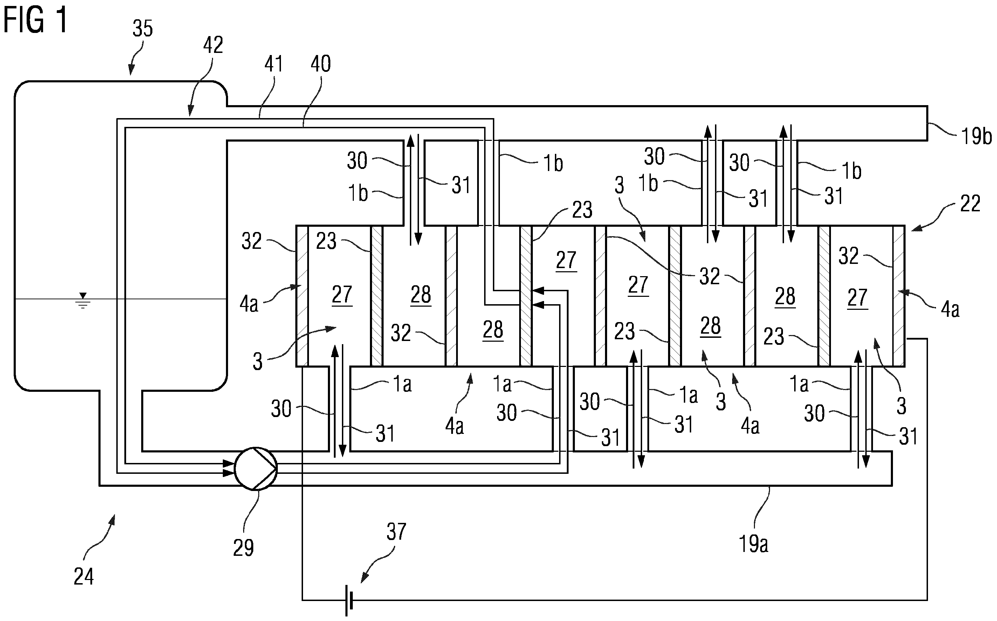

Figure 1 shows an electrolyzer 24. The electrolyzer 24 is composed of multiple parts, including an electrochemical cell stack 22, having multiple electrochemical cells 4a. Between neighbouring electrochemical cells 4a, a bipolar plate 32, is arranged. Multiple first channels, 1a, are connected to a first duct, 19a. Multiple second channels, 1b, are connected to a second duct, 19b. A storage tank 35, is connected to the first duct 19a, and the second duct 19b. A pumping device 29, is part of the electrolyzer 24. The electrochemical cell stack 22, is connected to a power supply 37. Each electrochemical cell 4a, has a reservoir 3, which contains an electrochemical separating element 23. The electrochemical separating element 23 splits the reservoir 3 into a cathode side 27 and an anode side 28. In the anode side 27, an anode (positive electrode) is arranged and in the cathode side 27, a cathode (negative electrode) is arranged. The electrochemical cells 4a are arranged in parallel for hydraulics. The anodes and cathodes of the electrochemical cells 4a are connected to the power supply 37 in series.

The electrolyzer 22 works in a cycle 42, preferably in a closed setting. The cycle 42 has a first part 40 and a second part 41. The first part of the cycle 40 starts at the storage tank 35 and ends at the electrochemical separation element 23. The second part of the cycle 41 starts at the electrochemical cell separation element 23 and ends at the storage tank 35. The second part of the cycle 41 is a continuation of the first part of the cycle 40, ensuring a closed cycle. The flow of fluid through the cycle 42 is a desired direction of flow in all embodiments, which is aligned with a first direction 30. An undesired direction of flow through all embodiments is aligned with a second direction 31.

The storage tank 35 is filled with a fluid, the fluid being at least partly in liquid state. The fluid is preferably a liquid, especially water. The fluid is pumped through the first part of the cycle 40 and the second part of the cycle 41 by the pumping device 29. In the first part of the cycle 40, the fluid is pumped from the storage tank 35 to the first duct 19a. The first channels 1a distribute the fluid to the reservoirs 3 of the multiple electrochemical cells 4a. The first channel(s) 1a connect the anode side 28 of the respective reservoir. In the second part of the cycle 41, the fluid is pumped from the cathode side 27 of the reservoir 3, to the channel(s) 1b. The second channel(s) 1b collect the fluid from the reservoirs 3 of the multiple electrochemical cells 4a to the second duct 19b and, back to the storage tank 35. Inside the reservoir 3 the fluid is in contact with the anode and the cathode, wherein the electrically loaded cathode side 27 and anode side 28 create an electrical field, especially in the area of the electrochemical separation element 23. Exposed to the electrical field, at least part of the fluid is split into molecules, for example hydrogen and oxygen in the cathode side 27 and the molecules, for example hydrogen in the process of water hydrolysis, diffuse through the electrochemical separation element 23 and to the storage tank 35, by being pumped through the channels 1b and ducts 19b. A byproduct of this process can be, for example, surplus water. The surplus water is being pumped alongside split molecules via the second channels 1b and the second duct 19b to the storage tank 35, being able to be reused. During this process the separating tank 35 is connected to a water source, and constantly filled to a certain level. The separated elements, e.g. hydrogen and oxygen in gaseous state, can be removed from the storage tank 35 to be stored separately.

### Figure 2

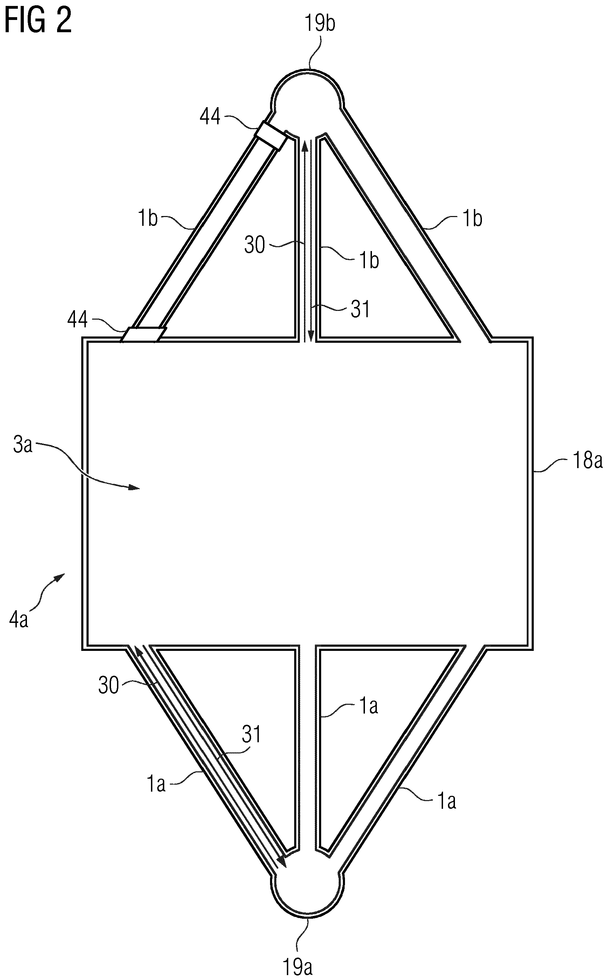

Figure 2 shows a first embodiment of a first electrochemical cell frame 18a of an electrochemical cell 4a shown in Figure 1, front to back cross section, wherein multiple first channels 1a and multiple second channels 1b are connected to the same reservoir 3a. The reservoir 3a is limited by a first electrochemical cell frame 18a. The first electrochemical cell frame 18a is connected to a first duct 19a and a second duct 19b via first channels 1a and second channels 1b arranged in a manifold manner. The first channels 1a and second channels 1b can be attached to the first electrochemical cell frame 18a and the first duct 19a and secondary duct 19b via sealed fastening means 44 and/or made as a mould. The first channels 1a are positioned to have their first direction 30 towards the first electrochemical cell frame 18a and the second direction 31 towards the first duct 19a. The secondary channels 1b are positioned to have the secondary direction 31 toward the first electrochemical cell frame 18a and the first direction 30 towards the second duct 19b.

Each of these elements can be independently manufactured and need to be connected in a fluid tight manner, or made as a mould, produced in one piece. The manifold manner of arrangement of the first channels 1a and second channels 1b allow a larger quantity of fluid to be circulated to and from the first electrochemical cell frame 18a.

### Figure 3

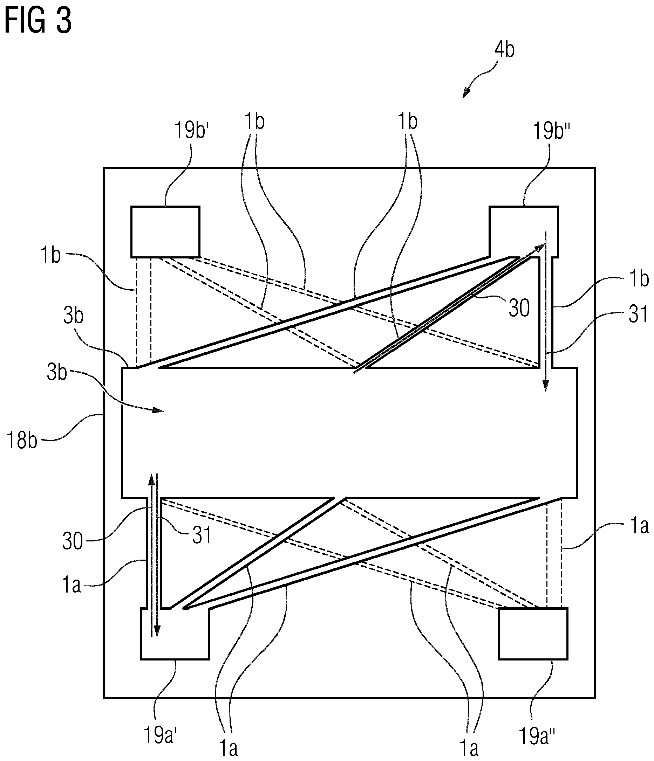

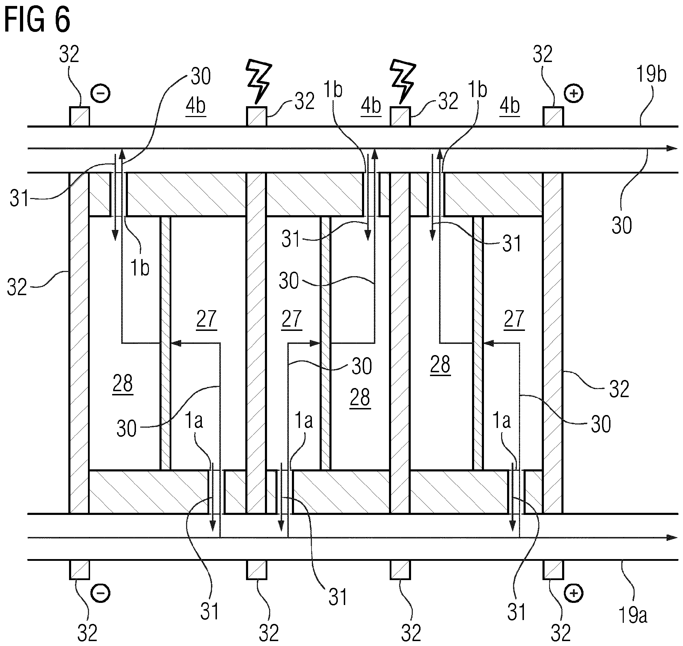

Figure 3 shows a second embodiment of an electrochemical cell 4b having a front to back cross section. The electrochemical cell 4b has an advantageous design to create a stack of electrochemical cells 22 (see Figure 1 and Figure 6). In this design, the electrochemical cell frame 18b limits a first duct 19a and second duct 19b, wherein the first duct 19a splits into a first branch 19a' and a second branch 19a'' and the second duct 19b is split into a first branch 19b' and a second branch 19b". The first duct 19a and second duct 19b are aligned with the first part of the cycle 40 and second part of the cycle 41.

The first channels 1a in the electrochemical cell 4b connect the reservoir 3b with the first branch 19a'of the first duct 19a and the second channels 1b connect the reservoir 3b and the second branch 19b'' of the second duct 19b in a manifold manner. The orientation of the electrochemical cell 4b in Figure 3 is the orientation A.

### Figure 4

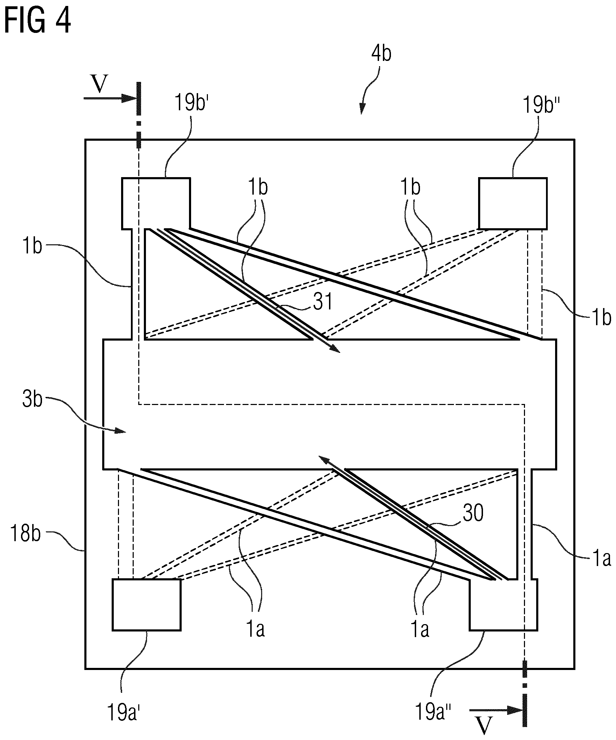

Figure 4 shows a front to back section of the electrochemical cell 4b, rotated at 180 degrees relative to a vertical axis. In this figure, the first channels 1a connect the reservoir 3b with the second branch 19a'' of the first duct 19a and the second channels 1b with the second branch 19b' of the second duct 19b in a manifold manner. The turning of the electrochemical cell 4b by 180 degrees allows a thin compact design of the electrochemical cells 4b into an electrochemical cell stack 22 (see Figure 1 and 6).

The first channels 1a and second channels 1b are aligned with a desired direction of flow in the cycle 42 (see Figure 1), which is the first direction 30. The structure can be also produced as a mould in a one piece, whereby all the elements are linked together from manufacturing. In this way, the electrochemical cell would be lighter, lower the chance of leakage and being easier to produce and transport.

The orientation of the electrochemical cell 4b in Figure 4 is the orientation B.

### Figure 5

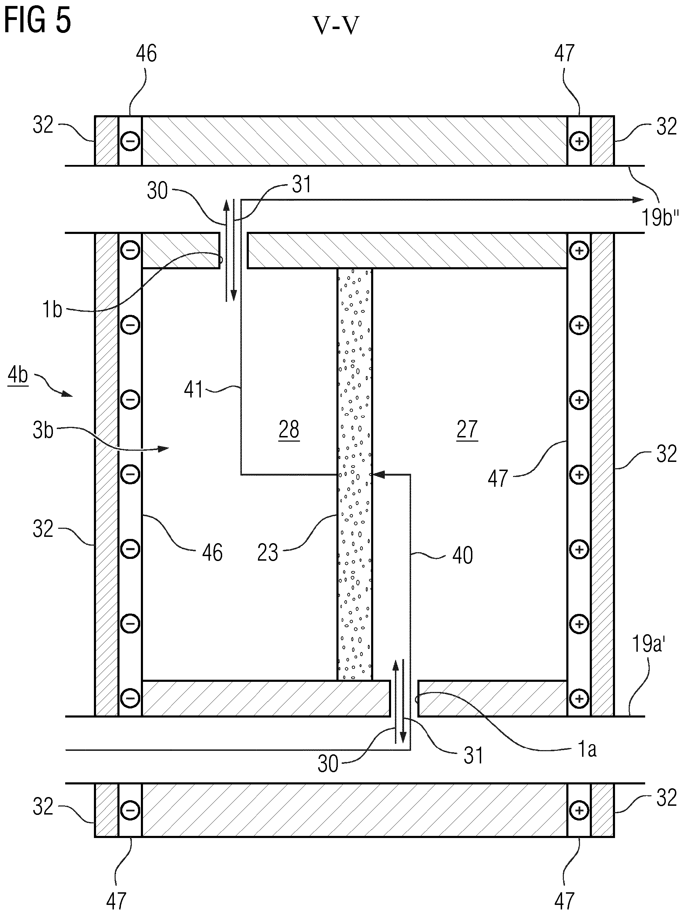

Figure 5 shows the same embodiment of electrochemical cell 4b, from a cross-section perspective in the direction V - V.

The first branch 19a' of the first duct 19a and the second branch 19b'' of the second duct 19b are embedded and protrude through the electrochemical cell frame 18b of the electrochemical cell 4b and the bipolar plates 32. The cathode side 27 and the anode side 28 are covered by bipolar plates 32, limiting the electrochemical cell 4b, in particular its reservoir 3b. In this way, the bipolar plates 32 provide mechanical support and allow electrical conductivity between neighbouring electrochemical cells 4b (see Figure 6).

In this embodiment, the first channels 1a connect the first branch 19a' of the first duct 19a with the cathode side 27 of the reservoir 3b, the first channels 1a being placed with the first direction 30 towards the reservoir 3b. The second channels 1b connect the anode side 28 of the reservoir 3b with the second branch 19b'' of the second duct 19b, the second channels 1b being placed with the first direction 30 towards the second branch 19b'' of the second duct 19b.

In the cathode side 27 of the reservoir 3b there is a cathode 47 and in the cathode side 27 of the reservoir 3b and an anode 46 in the anode side 28 of the reservoir 3b. The anode 46 and cathode 47 can have a sponge structure, in order to increase the contact area with the fluid inside the reservoir 3b.

The electrochemical separation element 23 is a membrane, preferably a PEM membrane, allowing the diffusion of particles from the cathode side 27 to the anode side 28, but limiting the fluid movement in the same direction. Furthermore, the electrochemical separation element shows where the first part of the cycle 40 ends and where the second part of the cycle 41 begins.

### Figure 6

Figure 6 shows an arrangement of multiple electrochemical cells 4b, as shown and described in the figures 3 and 4, forming a portion of an electrochemical cell stack. The arrangement of the electrochemical cells 4b forming a portion of the electrochemical cell stack have an orientation A and orientation B (see Figure 3 and Figure 4), arranged alternatively.

In this embodiment, the first branch 19a and the second duct 19b protrude through the electrochemical cells 4b, preferably stacked in an electrochemical cell stack 22 (see Figure 1). Each bipolar plate 32 separates the electrochemical cells 4b and cover the electrochemical cell stack 22 at both ends (see Figure 1).

The cathode sides 27 of neighbouring electrochemical cells 4b are oriented to face each other, being separated by a bipolar plate 32. The anode sides 28 of neighbouring electrochemical cells 4b are also oriented to face each other, being separated by a bipolar plate 32. Furthermore, in this embodiment, the bipolar plates 32 are connected to a electrical power supply. The advantage is that the electrochemical cells 4b can be stacked in a more compact setting and no additional structure for an anode and cathode is needed within the electrochemical cell stack. The electrochemical separating element 23 separates and isolates the cathode side 27 and anode side 28.

### Figure 7

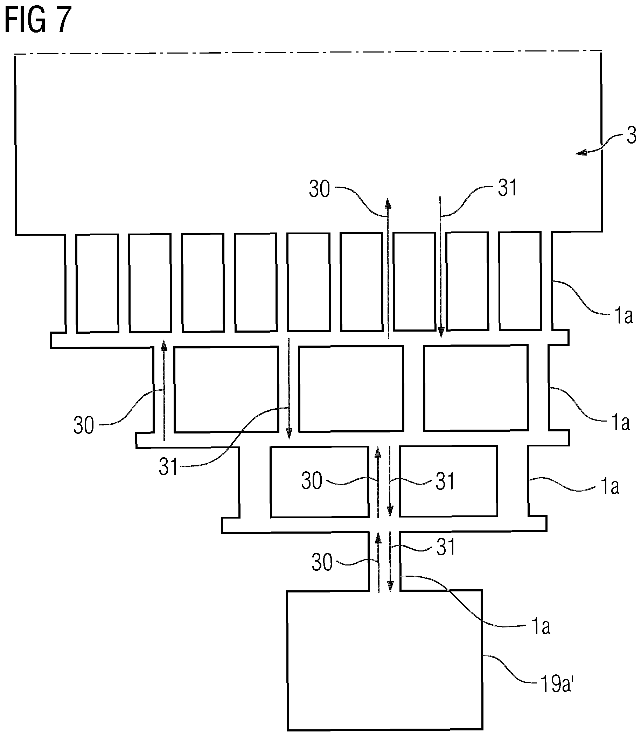

Figure 7 shows an alternative embodiment of the channel manifold arrangement from Figure 2. This manifold arrangement of the channels 1a connecting the first branch 19a' of the first duct 19a allows a reduction of friction in the first channels 1a and improve the even dispersion of the fluid towards the reservoir 3. This manifold structure can be alternatively used for first channels 1a and second channels 1b in the previous described embodiments.

### Figure 8

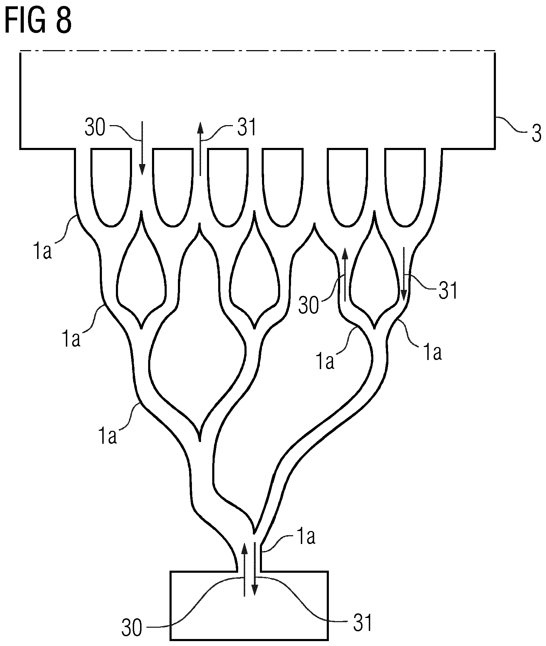

Figure 8 shows another embodiment of the channel manifold arrangement from Figure 2. In this arrangement, the channels 1a are branching towards the reservoir 3 in order to improve the flow and reduce the friction in the first channels 1a. This branching structure can be alternatively used for first channels 1a and second channels 1b in the previous described embodiments.

### Figure 9

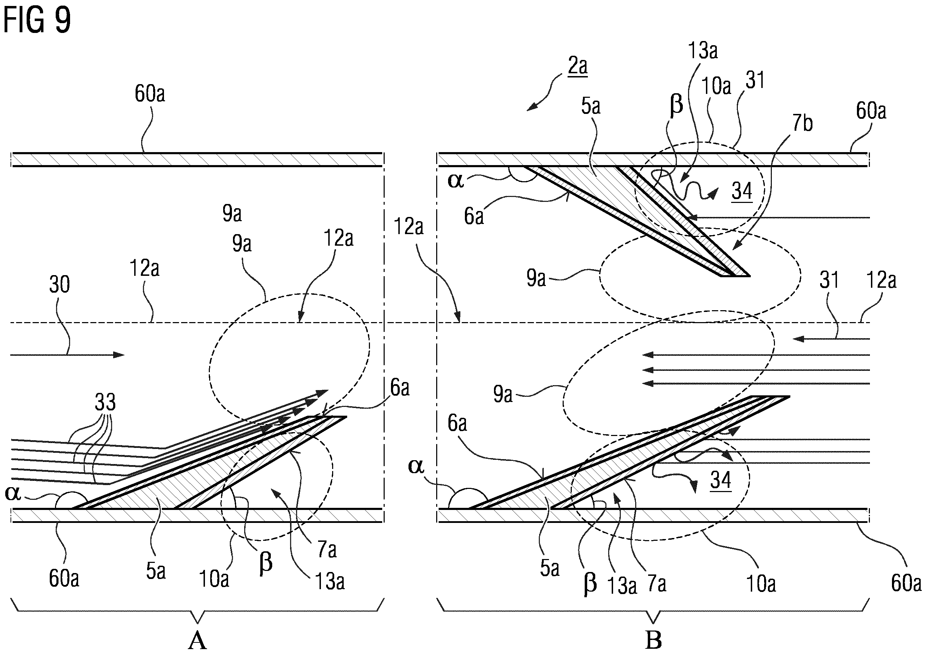

Figure 9 shows a first embodiment of a backflow limiting structure 2a. The backflow limiting structure 2a can be arranged anywhere in the cycle 42, especially in one of the first channels 1a and/or second channels 1b. Preferably, the backflow limiting structure 2a is arranged in the first channels 1a and second channels 1b, aligned with the desired direction of flow in the first part 40 of the cycle 42 and second part 41 of the cycle 42 (see previous figures).

In this embodiment, the backflow limiting structure 2a has a resistance barrier 5a, covered by a first deflector side 6a and a second deflector side 7a. The resistance barrier 5a is inclined towards the channel wall 60, at an obtuse angle α between the first deflector side 6a and the channel wall 60a and an acute angle β between the second deflector side 7a and the channel wall 60a. Each resistance barrier 5a provides a main section 9a and an auxiliary section 10a. The main sections 9a provide a continuing pathway, 12a, while the auxiliary sections 10a, provide a resistance pocket 13a.

The backflow limiting structure 2a is shown in two different scenarios. In a first scenario A, the backflow limiting structure 2a is exposed to a flow of fluid in the first direction 30. A laminar flow 33 is fostered by the first deflector side 6a, the fluid being diverted by the obtuse angle α, reducing turbulences. In a second scenario B, the backflow limiting structure 2a is exposed to a flow of fluid in the second direction 31. A flow of fluid in the second direction 31 is dammed by being diverted by the acute angle β, creating a turbulent flow 34.

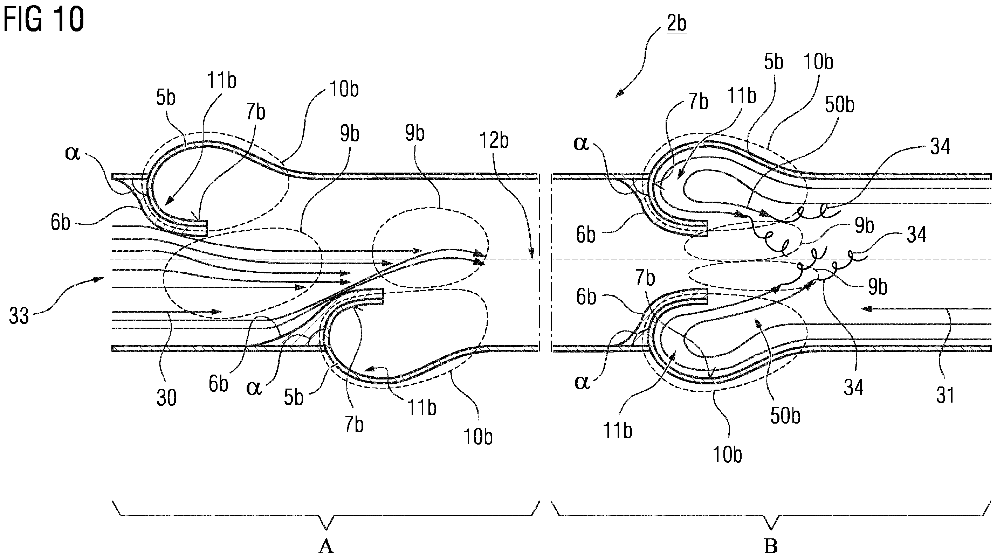

Due to a system malfunction, a flow of a fluid in the first direction 30 can be interrupted, by, for example a leakage in the channel leading to a backflow of the fluid in the second direction 31. The backflow limiting structure 2a would limit this backflow and facilitate the flow of the fluid in the first direction 30. A resistance pocket 13a is the area where the angle β is arranged, providing a channel termination. In the next figure 10, an improved resistance pocket is shown.

In general, the backflow limiting structures foster a laminar flow 33 in the first direction 30, while promoting a turbulent flow 34 in the second direction 31. The resistance barriers can match the cross-section circumference of the backflow limiting structure and/or be projections towards the outside or inside the backflow limiting structure.

### Figure 10

Figure 10 Shows a second embodiment of a backflow limiting structure 2b. This design of the second backflow limiting structure 2b can be arranged anywhere in cycle 42 (see Figure 1), especially in the first channels 1a and/or in the second channels 1b. Preferably, the second backflow limiting structure 2b is arranged in both first channels 1a and second channels 1b, aligned with the desired direction of flow in the first part 40 of the cycle 42 and second part 41 of the cycle 42 (see previous figures).

The second backflow limiting structure 2b is shown in two different scenarios - first scenario A and second scenario B. In the first scenario A, the second backflow limiting structure 2b is exposed to a flow of fluid in the first direction 30. In the second scenario B, the second backflow limiting structure 2b is exposed to a flow of fluid in the second direction 31.

In this embodiment, the second backflow limiting structure 2b has multiple main sections 9b and multiple auxiliary sections 10b. The auxiliary sections 10b are limited by resistance barriers 5b inclined at an obtuse angle α towards the second direction 31 and an acute angle β towards the first direction 30. In this instance, the auxiliary sections 10b are in the form of returning pathways 11b. The returning pathways 11b are a type of resistance pockets. The main sections 9b form a continuing pathway 12b. The resistance barrier 5b can be covered by a first deflector side 6b and/or a second deflector side 7b.

In the first scenario A, the laminar flow of the fluid 33 in the first direction 30 is fostered, by being directed by the first deflector side 6b of the resistance barrier 5b by the obtuse angle α, with limited turbulences. In the second scenario B, the resistance barrier 5b is exposed to a flow of fluid in the second direction 31. A flow of fluid in the second direction 31 is dammed by at least partly returning the fluid in the first direction 30. When a flow of fluid in the second direction 31 takes place, the returning pathway 11b returns at least part of the fluid in the first direction 30. A returned fluid 50b impacts the remaining fluid flowing in the second direction 31, creating a turbulent flow 34 and at least partly damming the channel. In this case the damming is hydraulic, increasing the resistance within the flow of fluid in the second direction 31 by the turbulent flow 34.

Compared to the embodiment shown in Figure 9, the second backflow limiting structure 2b is more efficient and allows a larger volume of the fluid flowing in the second direction 31 to be returned in the first direction 30, increasing the effect of damming.

In the first scenario A, the resistance barriers 5b are arranged offset to each other while in the second scenario B, the resistance barriers 5b are arrange parallel to each other. The first deflector side 6b can have striations to guide the laminar flow 33 in the first direction 30. These arrangements of the resistance barriers can be alternated in all embodiments.

In general, the backflow limiting structures foster a laminar flow 33 in the first direction 30 and promote a turbulent flow 34 in the second direction 31. The resistance barriers can match the cross-section circumference of the backflow limiting structure and/or be projections towards the outside or inside the backflow limiting structure.

### Figure 11

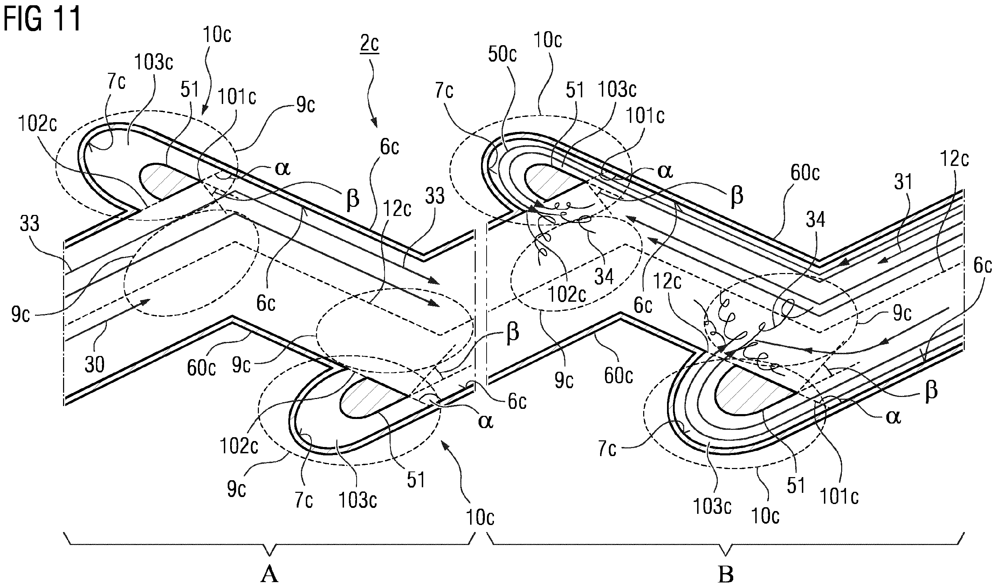

Figure 11 shows a third backflow limiting structure 2c, which is a further improved embodiment to Figure 10, where the auxiliary sections 10c are designed in an improved manner, as a looped channel 103c. The looped channels 103c are a type of resistance barrier and returning pathway, having a first deflector side 6c and a second deflector side 7c.

The third backflow limiting structure 2c can be arranged anywhere in cycle 42 (see Figure 1), especially in the first channels 1a and/or in the second channels 1b. Preferably, the third backflow limiting structure 2c is arranged in both first channels 1a and second channels 1b, aligned with the desired direction of flow, in the first part 40 of the cycle 42 and second part 41 of the cycle 42 (see previous figures). The third backflow limiting structure 2c is shown in two different scenarios - scenario A and scenario B. In the first scenario A, the third backflow limiting structure 2c is exposed to a flow of fluid in the first direction 30. In scenario B, the third backflow limiting structure 2c is exposed to a flow of fluid in the second direction 31.

In this embodiment, the third backflow limiting structure 2c has multiple main sections 9c and multiple auxiliary sections 10c. The main sections 9c provide a continuing pathway 12c. To improve the returning pathways disclosed in Figure 10, a divider 51 is placed in the auxiliary sections 10c, limiting the looped channels 103c. The looped channels 103c have an entry 101c and an exit 102c. The looped channels 103c can have raised striations aligned with the laminar flow of returned fluid 50c, to minimize the loss the energy of the returned fluid 50c.

In the first scenario A, the laminar flow of the fluid 33 is fostered, by being diverted through the continuing pathway 12c, passing the auxiliary sections 10c and reducing turbulences. The divider 51 of the third backflow limiting structure 2c provides less resistance than the second backflow limiting shown in Figure 10, by reducing turbulence more. The divider 51 acts as a guiding shoulder for the fluid flowing in the first direction 30, exposing the fluid to a diversion by the angle α when impacting the channel wall 60c.

In the second scenario B, at least part of the fluid flowing in the second direction 31 would be guided towards the continuing pathway 12c and at least part of the fluid would be guided to the entry 101c and enter the looped channel 103c. Upon entering the looped channel 103c, part of the fluid flowing in the second direction 31 forms a returned fluid 50c. The looped channel 103c fosters a momentum of the returned fluid 50c, which is guided against the remaining flow of fluid in the second direction 31. The guidance through the looped channel 103c avoids creating early turbulence, the returned fluid 50c having a laminar flow, providing high energy of the returned fluid at the exit 102c.

The efficiency of the looped channel 103c allows a compact design of the backflow limiting structure 103c, resulting in a reduction of its dimension and the possibility of its arrangement in small or narrow places (e.g. electrochemical cell). The returned fluid 50c would impact the remaining flow of fluid in the second direction 31 and create turbulent flow 34, damming the backflow limiting structure 2c at least partly.

In general, the backflow limiting structure foster a laminar flow 33 in the first direction 30 and promote a turbulent flow 34 in the second direction 31. The resistance barriers can match the cross-section circumference of the backflow limiting structure and/or be projections towards the outside or inside the backflow limiting structure.

### Figure 12

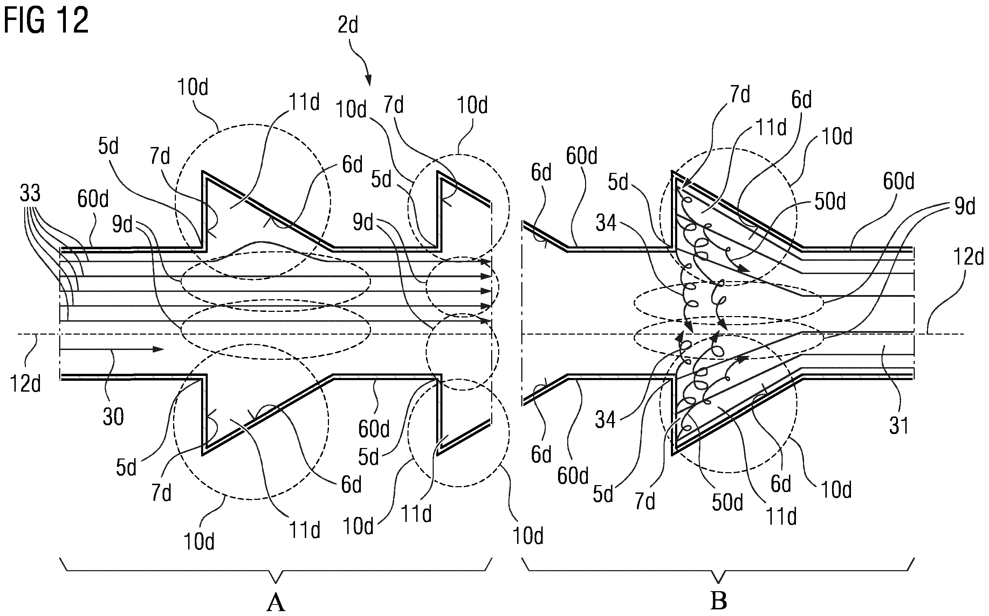

Figure 12 shows a fourth embodiment of a backflow limiting structure 2d. The design of the fourth backflow limiting structure 2d can be arranged anywhere in cycle 42, especially in the first channels 1a and/or in the second channels 1b. Preferably, the second backflow limiting structure 2b is arranged in both first channels 1a and second channels 1b, aligned with the desired direction of flow in the first part 40 of the cycle 42 and second part 41 of the cycle 42 (see previous figures).

The fourth backflow limiting structure 2d is shown in two different scenarios - first scenario A and second scenario B. In the first scenario A, the fourth backflow limiting structure 2d is exposed to a flow of fluid in the first direction 30. In the second scenario B, the fourth backflow limiting structure 2d is exposed to a flow of fluid in the second direction 31.

The fourth backflow limiting structure 4d is shaped by the channel wall 60d and has multiple resistance barriers 5d. The resistance barriers 5d have a first deflector side 6d and a second deflector side 7d and provide multiple main sections 9d and multiple auxiliary sections 10d, where the auxiliary sections 10d have the form of returning pathways 11d and the main sections 9d form a continuing pathway 12d. The returning pathways 11d are a type of resistance pockets. The returning pathways 11d are set opposite each other but can also be arranged offset to each other.

In the first scenario A, the laminar flow of the fluid 33 is fostered in the first direction 30 and passes through the continuing pathway 12d with limited turbulences. In the second scenario B the flow of fluid in the second direction 31 impacts the returning pathways 11d, creating turbulent flow 34. The turbulent flow 34 creates a returned fluid 50d which impacts the remaining flow of fluid in the second direction 31 and at least partly dams the channel.

In general, the backflow limiting structures foster a laminar flow 33 in the first direction 30 and promote a turbulent flow 34 in the second direction 31. The resistance barriers can match the cross-section circumference of the backflow limiting structure and/or be projections towards the outside or inside the backflow limiting structure.

### Figure 13

The previous backflow limiting structures from Figures 9, 10, 11 and 12 present embodiments where the flow in the second direction 31 is dammed by the hydraulic force of a turbulent flow and/or a returned fluid.

In this embodiment, the fifth backflow limiting structure 2e shows different embodiments of resistance barriers that can be used for all resistance barriers.

The fifth backflow limiting structure 2e has a mobile resistance barrier 15e having a first deflector side 6e and a second deflector side 7e. The mobile resistance barrier 15e is attached to a channel wall 60e via a fastening means 104e. In this example the fastening means 104e is a pivot element.

A mobile resistance barrier uses the force of a fluid flowing in different directions to be active or passive. A flow of fluid in the first direction 30 would deactivate the mobile resistance barrier 15e, forming a passive state I. A flow of fluid in the second direction 31 would at least partly activate the resistance barrier 15e, forming an active state II. An active state of the resistance barrier 15e would provide more resistance to the flow of the fluid in the backflow limiting structure 15e than a passive state would.

The mobile resistance barrier 15e is replaceable from the wall 60e for maintenance or changed based on the required resistance in different backflow limiting structures.

The backflow limiting structure 2e presents an additional structure of a resistance barrier in the form of a fixed resistance barrier 5e, made from the channel 60e, having a first deflector side 6e' second deflector side 7e'. The first deflector side 6e' is shaped by the channel wall 60e, whereas the second deflector side 7e' is attached to the wall 60e. The advantage of this structure is that it can be produced at the same time as a channel and can provide high resistance to degradation when suppressing the flow of fluid in the second direction 31. The second deflector side 7e' is modular and can be replaced with other second deflector sides of different shapes and dimensions.

In general, the backflow limiting structures foster a laminar flow 33 in the first direction 30, while it promotes a turbulent flow 34 in the second direction 31.

### Figure 14

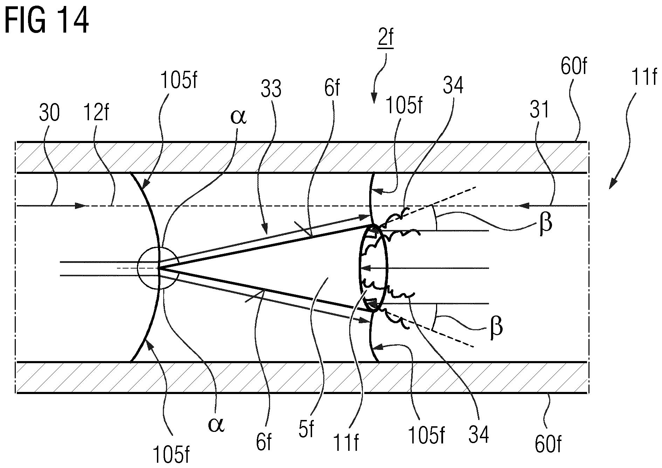

Figure 14 shows a sixth embodiment of a backflow limiting structure 2f which is separate and distanced from channel wall 60f.

The sixth embodiment of a backflow limiting structure 2f is preferably in the centre of a channel. The sixth embodiment of the backflow limiting structure 2f is shaped as a hollow cone, having a first deflector side 6f and a second deflector side 7f and providing a returning pathway 11f. It is held in place by special fastening means 105f which provide limited friction with the flow of fluid in the channel. An example of such special fastening means 105f would be thin fastening means, preferably flattened perpendicularly to the first direction 30 and/or second direction 31.

Figure 14 shows how a laminar flow of fluid 33 is fostered in the first direction 30 and how a flow of fluid in the second direction 31 can dam the sixth embodiment of the backflow limiting structure 2f. A part of the flow of fluid in the second direction 31 would enter the returning pathway 11f. The returning pathway 11f returns at least part of the fluid flowing in the second direction 31 and creates a turbulent flow 34. The turbulent flow 34 impacts the remaining fluid flowing in the second direction 31, damming the sixth embodiment backflow limiting structure 2f at least partly.

### Figure 15 and Figure 16

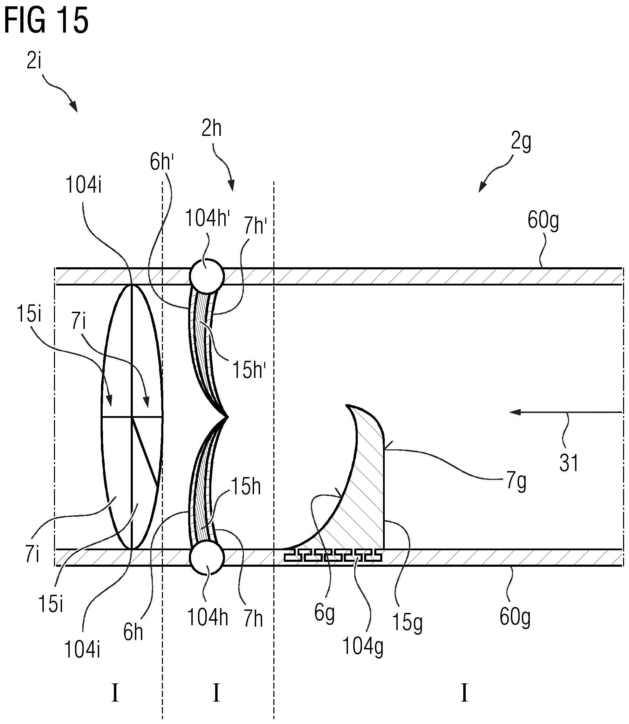

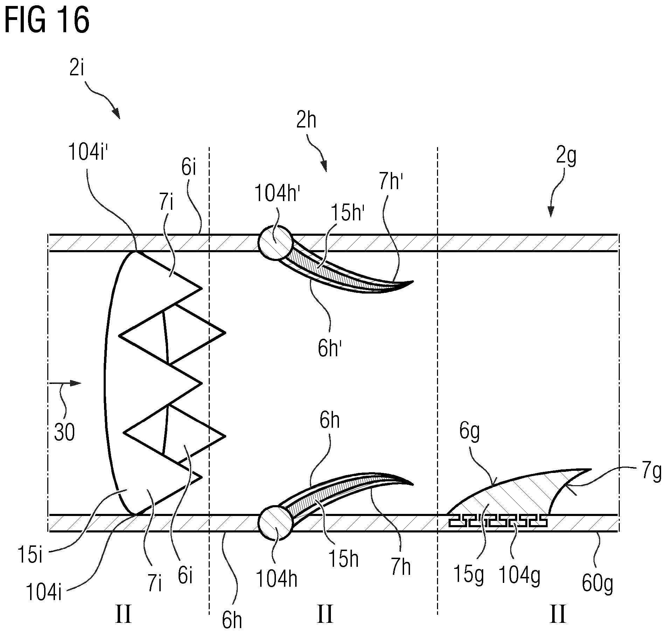

Figures 15 and 16 show a seventh, eighth, and ninth backflow limiting structures 2g, 2h, 2i, having mobile resistance barriers 15g, 15h, 15h', 15i. In Figure 15 the resistance barriers 15g, 15h, 15h', 15i are shown in an active state I. In Figure 16, the mobile resistance barriers 15g, 15h, 15h' 15i are shown in a passive state II. The active states I of the resistance barriers 15g, 15h, 15h', 15i occur when the backflow limiting structures 2g, 2h, 2i are exposed to a flow of fluid in the second direction 31 (see Figure 15). The passive states II of the resistance barriers 15g, 15h, 15h', ,15i occur when the backflow limiting structures 2g, 2h, 2i are exposed to a flow of fluid in the first direction 30 (see Figure 16).

The seventh backflow limiting structure 2g comprises the mobile resistance barrier 15g. The mobile resistance barrier 15g is elastic and interchangeable as it is attached to the channel wall 60g in a form fit setting. When being in the active state I, the resistance barrier 15g preferably raises perpendicular to the channel wall 60g and is able to create turbulence when experiencing a flow of fluid in the second direction 31 (see Figure 15). When being in the passive state II, the mobile resistance barrier 15g elastically deforms towards the channel wall 60g when experiencing a flow of fluid in the first direction 30 (see Figure 16).

The eighth backflow limiting structure 2h has the function of a moveable ventil body and comprises two mobile resistance barriers 15h, 15h'. The mobile resistance barriers 15h, 15h' can provide damming of the channel by at least partly mechanically closing the channel when exposed to a flow of fluid in the second direction 31 and being in the active state I (see Figure 15). Preferably, the resistance barriers 15h, 15h' touch and completely close the channel, increasing the effect of damming. Depending on the targeted damming, the dimension of the resistance barriers 15h, 15h' may vary. The mobile resistance barriers 15h, 15h' are attached to the channel wall 60g via fastening means 103h, 103h' respectively. The fastening means 103h, 103h' have the ability to pivot relative to the channel wall 60g. The first deflector sides 6h, 6h' can have striations which foster a laminar flow in the first direction 30 when being in the passive state II. The second deflector sides 7h, 7h' can have striations perpendicular to the flow of fluid in the second direction 31 in order to increase the friction between a fluid flowing in the second direction 31 and the second deflector sides 7h, 7h'. An increased friction between the fluid flowing in the second direction 31 and the second deflector sides 7h, 7h' would promote a (partly) closure of the mobile resistance barriers 15h, 15h', resulting in an efficient damming effect in the channel.

The ninth backflow limiting structure 2i has the function of a moveable ventil body and is formed of different slices. The mobile resistance barrier 15i can provide damming of the channel by at least partly mechanically closing the channel when exposed to a flow of fluid in the second direction 31 and being in the active state I (see Figure 15). When exposed to a flow of fluid in the first direction 30, the mobile resistance barrier 15i would (partly) open and be in passive state II (see Figure 16). The backflow limiting structure 2i can be, for example, bolted to the channel wall 60g via the fastening means 103i.

In general, the backflow limiting structures foster a laminar flow 33 in the first direction 30, while it promotes a turbulent flow 34 in the second direction 31.

## Claims

1. Embodiment having a channel (1a, 1b) for transporting a fluid, the channel having a backflow limiting structure (2a, 2b, 2c, 2d, 2e, 2f, 2g, 2h, 2i) which fosters a flow of the fluid in a first direction (30) while suppressing a backflow of the fluid in a second direction (31), the first direction (30)and the second direction (31) having an opposite orientation,
**characterized in that,**
the channel (1a, 1b) is connected to a reservoir (3, 3a, 3b) of an electrochemical cell (4a, 4b), having a cathode (47) and an anode (46).

2. Embodiment according to claim 1,
**characterized in that,**
the backflow limiting structure (2a, 2b, 2c, 2d, 2e, 2f, 2g, 2h, 2i) provides a resistance barrier (5a, 5b, 5c, 5d, 5e, 5f), the resistance barrier (5a, 5b, 5c, 5d, 5e, 5f) fostering a laminar flow (33) in the first direction (30), while suppressing the backflow in the second direction (31).

3. Embodiment according to claim 2,
**characterized in that,**
the resistance barrier (5a, 5b, 5c, 5d, 5e, 5f) is positioned at an obtuse angle (α) between a channel wall (60a, 60b, 60c, 60d, 60f, 60g) tangent and the flow of fluid in the first direction (30), and at an acute angle (β) between the channel wall (60a, 60b, 60c, 60d, 60f, 60g) tangent and the flow of fluid in the second direction (31).

4. Embodiment according to claim 2 or claim 3,
**characterized in that,**
the backflow limiting structure (2a, 2b, 2c, 2d, 2e, 2f, 2g, 2h, 2i) provides a resistance barrier (5a, 5b, 5c, 5d, 5e, 5f), having a first deflector side (6a, 6b, 6c, 6d, 6e, 6e', 6f, 6g, 6h, 6h, 6i) and a second deflector side (7a, 7b, 7c, 7d, 7e, 7e', 7f, 7g, 7h, 7h', 7i), the first deflector side (6a, 6b, 6c, 6d, 6e, 6e', 6f, 6g, 6h, 6h, 6i) fostering a laminar flow (33) in the first direction (30), while the second deflector side (7a, 7b, 7c, 7d, 7e, 7e', 7f, 7g, 7h', 7h, 7i) suppresses the backflow in the second direction by disturbing a laminar flow (33).

5. Embodiment according to at least one of the claims 2, 3 or 4,
**characterized in that,**
the first deflector side (6a, 6b, 6c, 6d, 6e, 6e', 6f, 6g, 6h, 6h', 6i) is positioned at an obtuse angle (α) between a channel wall (60a, 60b, 60c, 60d, 60f, 60g) tangent and the flow of fluid in the first direction (30), while the second deflector side (7a, 7b, 7c, 7d, 7e, 7e', 7f, 7g, 7h, 7h', 7i) is positioned at an acute angle (β) between the channel wall (60a, 60b, 60c, 60d, 60f, 60g) tangent and the flow of fluid in the second direction (31).

6. Embodiment according to at least one of the claims 2, 3, 4 or 5,
**characterized in that,**
the backflow limiting structure (2a, 2b, 2c, 2d, 2e, 2f, 2g, 2h, 2i) is divided by the resistance barrier (5a, 5b, 5c, 5d, 5e, 5f) providing a main section (9a, 9b, 9c, 9d) and an auxiliary section (10a, 10b, 10c, 10d).

7. Embodiment according to claim 6,
**characterized in that,**
the main section (9a, 9b, 9c, 9d) and the auxiliary section (10a, 10b, 10c, 10d) merge in the first direction (30) while separating in the second direction (31).

8. Embodiment according to at least one of the claims 6 or 7,
**characterized in that,**
the auxiliary section (10a, 10b, 10c, 10d) returns at least part of the fluid flowing in the second direction (31) to the main section (9a, 9b, 9c, 9d) in the first direction (30), by having a returning pathway (11b, 11d).

9. Embodiment according to at least one of the claims 6 to 8,
**characterized in that,**
the main section (9a, 9b, 9c, 9d) provides a continuing path (12a, 12b, 12c, 12d) whereas the auxiliary section (10a, 10b, 10c, 10d) provides a resistance pocket (13a).

10. Embodiment according to at least one of the claims 2 to 9,
**characterized in that,**
at least one of the resistance barriers (5a, 5b, 5c, 5d, 5e, 5f) is at least partly rigid and/or partly mobile in particularly one of the deflector sides.

11. Embodiment according to at least one of the claims 2 to 10,
**characterized in that,**
the resistance barrier (5a, 5b, 5c, 5d, 5e, 5f), particularly the first deflector side (6a, 6b, 6c, 6d, 6e, 6e', 6f, 6g, 6h, 6h', 6i) and/or second deflector side (7a, 7b, 7c, 7d, 7e, 7e', 7f, 7g, 7h, 7h', 7i), is at least partly shaped by the channel wall (60b, 60c, 60d, 60g) or distinct from the channel wall (60a, 60b, 60e, 60f, 60g).

12. Embodiment according to claim 11,
**characterized in that,**
an at least partly mobile resistance barrier (15e, 15g, 15h, 15i) is activated (II) by a flow in the second direction (31), while being passive (I) upon a flow in the first direction (30).

13. Embodiment according to at least one of the previous claims 1 to 12,
**characterized in that,**
the reservoir (3, 3a, 3b) is limited by a frame (18a, 18b), wherein the channel (1a, 1b) protrudes at least partly through the frame (18a, 18b).

14. Embodiment according to at least one of the previous claims 1 to 13,
**characterized in that,**
the electrochemical cell (4a, 4b) has at least a duct (19a, 19b), the duct (19a, 19b) being connected to a channel (1a, 1b) .

15. Embodiment according to claim 14,
**characterized in that,**
the channel (1a, 1b), in particular multiple channels (1a, 1b), is/are connected to the duct (19a, 19b) in the manner of a branch.

16. Embodiment according to at least one of the previous claims 1 to 15,
**characterized in that,**
multiple channels (1a, 1b) are arranged in a manifold structure.

17. Embodiment according to at least one of the previous claims 1 to 16,
**characterized in that,**
a duct (19a, 19b) connects multiple electrochemical cells (4a, 4b), the electrochemical cells (4a, 4b) being arranged as an electrochemical cell stack (22).

18. Embodiment according to at least one of the previous claims 12 to 17,
**characterized in that,**
the duct (19a, 19b) is at least partly limited by the frame (18a, 18b) of an electrochemical cell (4a, 4b) and/or the frame (18a, 18b) of an electrochemical cell stack (22).

19. Embodiment according to at least one of the previous claims 1 to 18,
**characterized in that,**
the cathode (47) and the anode (46) are segregated by an electrochemical separating element (23).

20. Embodiment according to at least one of the previous claims 1 to 19,
**characterIzed in that,**
the electrochemical cell (4a, 4b) is part of an electrolyzer (24) .

21. Embodiment according to at least one of the previous claims 1 to 19,
**characterized in that,**
the electrochemical cell (4a, 4b) is part of a fuel cell.

22. Embodiment according to at least one of the previous claims 1 to 19,
**characterized in that,**
the electrochemical cell (4a, 4b) is part of a storage cell.
